# EUROPÄISCHE PATENTSCHRIFT

(11) **EP 0 315 868 B1**
(45) Veröffentlichungstag und Bekanntmachung des Hinweises auf die Patenterteilung: **10.05.1995**
(21) Anmeldenummer: 88118109.3
(22) Anmeldetag: 31.10.1988
(51) Int. Cl.: C08L 69/00

(54) **Verwendung von Redoxpfropfpolymerisaten zur Verbesserung der Benzinbeständigkeit von thermoplastischen, aromatischen Polycarbonat- und/oder Polyestercarbonat-Formmassen**
Use of redox graft polymers for improving the resistance against petrol of thermoplastic, aromatic polycarbonate and/or polyester carbonate moulding compositions
Utilisation de polymères greffés redox pour l'amélioration de la résistance contre l'essence de compositions à mouler de polycarbonates et/ou de polyestercarbonates aromatiques thermoplastiques

(30) Priorität: 10.11.1987 DE 3738143
(43) Veröffentlichungstag der Anmeldung: 17.05.1989
(73) Patentinhaber: BAYER AG, 51368 Leverkusen (DE)
(72) Erfinder: Wittmann, Dieter, Dr., D-4150 Krefeld 1 (DE); Schoeps, Jochen, Dr., D-4150 Krefeld 1 (DE); Lindner, Christian, Dr., D-5000 Koeln 60 (DE); Kress, Hans-Jürgen, Dr. c/o Mobay Corporation, Pittsburgh, PA 15205 (US)

(56) Entgegenhaltungen:
- CHEMICAL ABSTRACTS, Band 83, 1975, Seite 44, Zusammenfassung Nr. 194315p, Columbus, Ohio, US; & JP-A-75 063 058 (TEIJIN LTD) 29-05-1975
- CHEMICAL ABSTRACTS, Band 77, Nr. 14, 2. Oktober 1972, Seite 44, Zusammenfassung Nr. 89442f, Columbus, Ohio, US; & JP-B-71 38 344 (JAPAN CARBIDE IND. CO., INC.) 11-11-1971
- PATENT ABSTRACTS OF JAPAN, Band 10, Nr. 355 (C-388)[2411], 29. November 1986; & JP-A-61 155 445 (MITSUBISHI RAYON CO. LTD) 15-07-1986

## Beschreibung

In der deutschen Patentanmeldung P 37 08 913.7 ist die Herstellung von Pfropfpolymerisaten aus
a) 40 bis 90 Gew.-% eines wenigstens partiell vernetzten, teilchenförmigen Dienkautschuks eines mittleren Teilchendurchmessers von 0,1 bis 0,6 »m und
b) 60 bis 10 Gew.-% Styrol, Acrylnitril, Methylmethacrylat oder Mischungen daraus durch Emulsions-Pfropfpolymerisation
beschrieben, die dadurch gekennzeichnet ist, daß man zur Pfropfpolymerisation ein Initiatorsystem aus einem organischen Hydroperoxid und Ascorbinsäure unter Erzielung einer Pfropfausbeute von > 60 Gew.-% verwendet.

Pfropfpolymerisate harzbildender Monomerer auf Kautschuk sind bekannt und haben sich zur Herstellung von Formkörpern aus Chemiewerkstoffen bewährt. Bei der Herstellung solcher Pfropfpolymerisate durch radikalische Polymerisation bilden sich als Nebenprodukte freie Polymerisate der harzbildenden Monomeren. Die Verhältnisse sind durch den Pfropfgrad quantitativ beschrieben, d. h. durch das Gewichtsverhältnis der pfropfpolymerisierten Monomeren zur (Kautschuk)Pfropfgrundlage. In Pfropfpolymerisaten mit Kautschukgehalten von 40 Gew.-% ist der maximale Pfropfgrad somit 1,5; in solchen mit 90 Gew.-% Kautschuk dagegen 0,1, wenn die harzbildenden Monomeren vollständig auf den Kautschuk aufgepfropft sind. Der Pfropfgrad ist abhängig vom Kautschukgehalt und eignet sich daher besonders zum Vergleich von Pfropfpolymerisaten mit gleichem Kautschukgehalt. Meist ist der Pfropfgrad kleiner als der maximal mögliche z.B. bei Kautschukgehalten von 40 Gew.-% im Bereich von etwa 0,7, und bei Kautschukgehalten von 90 Gew.-% im Bereich von etwa 0,05, d.h. nur ein Teil des bei der Pfropfpolymerisation gebildeten Harzes wird wirklich auf den Kautschuk aufgepfropft. Zur Charakterisierung von stark gepfropften Kautschuken (oder zur Beschreibung des Ausmaßes einer Pfropfpolymerisation) eignet sich besser die Pfropfausbeute, d.h. das Gewichtsverhältnis an gepfropften Monomeren zum gesamten Harzmonomeren (der Wert wird mit 100 multipliziert und in % angegeben).

Bei vollständiger Pfropfung beträgt die Pfropfausbeute 100 %. Die üblichen Pfropfausbeuten für Pfropfpolymerisate mit Kautschukgehalten von 40 bis 90 Gew.-% sind etwa 40 bis 60%, wobei hohe Pfropfausbeuten i.a. nur bei Pfropfpolymeren mit hohem Kautschukgehalt (über 60 %) vorkommen. Für eine Reihe von Anwendungen sind aber Pfropfpolymerisate mit möglichst hoher Pfropfausbeute (die möglichst geringe Mengen freies Polymerisat der harzbildenden Monomeren enthalten) erforderlich, da das nicht an den Kautschuk gebundene Polymerisat die physikalischen Eigenschaften (insbesondere in Mischungen mit weiteren Komponenten) beeinflußt. So verlieren die Pfropfpolymerisate bei Abwesenheit (oder Reduzierung der Menge) der freien Polymerisate ihren reinen Thermoplastcharakter und werden Elastomeren ähnlicher, bis hin zum Erscheinungsbild thermoplastisch verarbeitbarer Kautschuke.

Gemäß deutscher Patentanmeldung P 37089 13.7 wurde nun gefunden, daß man Pfropfpolymerisate harzbildender Monomerer auf Kautschuke - im folgenden auch Harz/Kautschuk-Pfropfpolymerisate genannt - mit hoher Pfropfausbeute herstellen kann (so daß sie überraschend geringe Anteile freier Polymerisate enthalten), wenn man die Pfropfpolymerisation in Emulsion unter Verwendung eines Initiatorsystems aus einem organischen Hydroperoxid und Ascorbinsäure durchführt.

Die erhaltenen Pfropfpolymerisate eignen sich als thermoplastische Formmassen oder als Bestandteile solcher Massen, beispielsweise in Kombination mit Styrol-Acrylnitril-Copolymeren, α-Methylstyrol-Acrylnitril-Copolymeren, PVC oder anderen ABS Pfropfpolymerisaten.

Gemäß einer bevorzugten Ausführungsform führt man die Pfropfpolymerisation der Monomeren b) in wäßriger Emulsion in Gegenwart einer Emulsion des Kautschukpolymerisates a) bei Temperaturen von 40 bis 70°C, insbesondere 50 bis 70°C durch, unter Einsatz eines Initiatorsystems aus organischem Hydroperoxid (I) und Ascorbinsäure (II), wobei 0,3 bis 1,5 Gew.-Teile (I) und 0,1 bis 1 Gewichtsteil (II), jeweils bezogen auf 100 Gew.-Teile Pfropfmonomere, eingesetzt werden und das Gewichtsverhältnis (I) : (II) 0,3 bis 15, insbesondere 1 bis 10, vorzugsweise 3 bis 8, ist. [Siehe Seite 4, Absatz 2, der deutschen Patentanmeldung P 37 08 913.7]

Gemäß deutscher Patentanmeldung P 37 08 913.7 sind die Pfropfpolymerisate Polymerisate, die durch Polymerisation von harzbildenden Monomeren in Gegenwart eines Dienkautschuks erhalten werden, wobei das Polymerisat der harzbildenden Monomeren möglichst vollständig pfropfpolymerisiert ist.

Dienkautschuke gemäß deutscher Patentanmeldung P 37 08 913.7 sind bevorzugt Homopolymerisate von Butadien, Isopren, Chloropren und Copolymerisate dieser Monomeren mit bis zu 40 Gew.-% anderer Monomeren wie Acrylnitril, Styrol, Alkylacrylat, Alkylmethacrylat sowie gegebenenfalls geringeren Mengen polyfunktioneller Vinylmonomer wie Divinylbenzol und Diol-bis-acrylate.

Die Kautschuke sind wenigstens partiell vernetzt und besitzen Gelgehalte von 10 bis 90 Gew.-%, insbesondere von 40 bis 80 Gew.-%, und sind teilchenförmig mit mittleren Teilchengrößen (d₅₀-Werte) von 0,1 bis 0,6 »m, insbesondere 0,1 bis 0,5 »m. Solche teilchenförmigen Kautschuke sind bekannt. Sie werden durch Emulsionspolymerisation hergestellt und liegen meist als Latices vor.

Gemäß deutscher Patentanmeldung P 37 08 913.7 können die Pfropfpolymerisate in wäßriger Emulsion durch Polymerisation der Monomeren auf einen in wäßriger Emulsion vorliegenden Kautschuk hergestellt werden. Dabei werden üblicherweise oberflächenaktive Hilfmittel eingesetzt, Emulgatoren oder Dispergatoren sowie gegebenenfalls Zusätze, um bestimmte pH-Werte und Elektrolytgehalte bei der Pfropfpolymerisation einzustellen. Unter Umständen kann man die Emulsions-Pfropfpolymerisation auch ohne Emulgatorzusatz durchführen, insbesondere dann, wenn man mit geringen Monomermengen arbeitet, bezogen auf die Kautschukmenge, oder wenn die in der Kautschukemulsion (Latex) schon selbst vorliegenden Mengen an Emulgator bereits ausreichen, um die Pfropfpolymerisation der Monomeren im Emulsionszustand bei genügender Emulsionsstabilität zu gewährleisten.

Besonders geeignet sind anionische Emulgatoren, vorzugsweise Alkali-Salze von Fettsäuren, Harzsäuren, disproportionierten Harzsäuren, Alkylsulfonsäuren, Arylsulfonsäuren. Sie werden in Mengen bis zu 5 Gew.-%, vorzugsweise bis zu 2,5 Gew.-%, bezogen auf die zu polymerisierenden Monomeren, eingesetzt.

Geeignete Hydroperoxide sind beispielsweise Cumolhydroperoxid, tert.-Butylhydroperoxid, Wasserstoffperoxid, vorzugsweise Cumolhydroperoxid und tert.-Butylhydroperoxid, als Hydroperoxide mit großen Halbwertszeiten.

Gemäß deutscher Patentanmeldung P 37 08 913.7 kann das Verfahren beispielsweise wie folgt durchgeführt werden:

Eine wäßrige Emulsion eines partiell vernetzten Dienkautschuks wird diskontinuierlich oder kontinuierlich in wäßriger Emulsion bepfropft; bei Polymerisationstemperaturen von 40 bis 70°C, insbesondere 50 bis 70°C, wird die Kautschukemulsion mit den Pfropfmonomeren sowie gegebenenfalls zusätzlichem Emulgator und Hydroperoxid sowie Ascorbinsäurelösungen versetzt. Dabei sind die Mengenverhältnisse, wie oben beschrieben, einzuhalten. In Ausnahmefällen können in die Polymerisation als weitere Komponente des Startersystems katalytisch geringe Mengen Schwermetallkationen, insbesondere Fe, zugefügt werden, insbesondere dann, wenn Dienkautschukemulsionen verwendet werden müssen, die selbst schon größere Mengen Komplexierungsagenzien enthalten. Normalerweise wird in dem Verfahren ohne Zusatz von Eisenionen gearbeitet; diese Methode ist bevorzugt und erlaubt technisch vorteilhaft die Gewinnung praktisch schwermetallfreier- bzw. -armer Pfropfpolymerisate, da sich bekanntermaßen derartige Metallspuren nachteilig auf anwendungstechnische Eigenschaften von Kunststoffen auswirken können. Das Verfahren arbeitet mit wäßrigen Lösung von Ascorbinsäure und wäßrigen Lösungen von Hydroperoxid; vorteilhaft ist es, nicht genügend wasserlösliche Hydroperoxide, wie Cumolhydroperoxid, in Form einer wäßrigen Emulsion in das Polymerisationssystem einzuspeisen. In solchen Emulsionen wird vorteilhaft der gleiche Emulgator eingesetzt wie in der Pfropfpolymerisation.

Das Hydroperoxid und die Ascorbinsäure können portionsweise oder kontinuierlich in die Pfropfpolymerisation eindosiert werden. In einer bevorzugten Variante wird das Hydroperoxid anteilmäßig mit dem zu bepfropfenden Kautschuk in den Reaktoren vorgelegt; die Pfropfmonomeren sowie die restliche Ascorbinsäure, Hydroperoxid und gegebenenfalls Emulgator werden mit fortschreitender Polymerisation der Pfropfmonomeren separat in den Reaktor eingespeist.

Die Mengen Hydroperoxid und Ascorbinsäure sind kritisch. Bei Überdosierung von Hydroperoxid und/oder Ascorbinsäure wird die Pfropfpolymerisation beeinträchtigt. Die Pfropfausbeute geht zurück; das Molekulargewicht des gepfropften und des freien Harzes wird geringer; Unter-oder Überschreitung der Mengen an Hydroperoxid und Ascorbinsäure kann sich außerdem empfindlich auf Monomerumsatz und Emulsionsstabilität auswirken, so daß die technische Realisierung der Pfropfpolymerisation unmöglich wird. Um die Durchführung des Verfahrens, die Struktur der Pfropfpolymerisate und deren physikalische Eigenschaften zu optimieren, sind bei der Pfropfpolymerisation eine Temperatur von 40 bis 70°C und die oben angegebenen Hydroperoxid/Ascorbinsäuremengen unbedingt einzuhalten.

Bei der Pfropfpolymerisation bis zu Monomerumsätzen von größer 90 Gew.-%, insbesondere größer 98 Gew.-%, fallen lagerstabile Pfropfpolymeremulsionen mit Polymerisatgehalten von 25 bis 50 Gew.-% an; das Pfropfpolymerisat selbst läßt sich gut aus den Emulsionen durch bekannte Koagulations-Verfahren (z.B. mittels Säuren oder Salzen) isolieren. Will man die Pfropfpolymerisate mit thermoplastischen Harzen kombinieren, die selbst als Emulsion vorliegen, so kann man die Pfropfpolymerisatemulsion mit der Harzemulsion mischen und gemeinsam koagulieren.

Die Pfropfpolymerisate gemäß deutscher Patentanmeldung P 37 08 913.7 zeichnen sich durch besondere thermoplastisch elastische Eigenschaften aus, die sich beispielsweise im Spannungsdehnungsverhalten und im Modul zeigen; sie können daher vorteilhaft verwendet werden, wenn kautschukartiges Verhalten in Kombination mit bestimmter Steifigkeit gefordert wird, also zur Herstellung von Gummiartikeln, die nicht vulkanisiert werden müssen. Andererseits stellen sie wertvolle Komponenten für thermoplastische Formmassen dar, z.B. zur Herstellung hochkerbschlagzäher Formkörper mit außergewöhnlichen Eigenschaftskombinationen z.B. von Wärmestandfestigkeit und Kerbschlagzähigkeit bzw. Modulverhalten und Kerbschlagzähigkeit. Insbesondere eignen sie sich zur Mischung mit PVC; die resultierenden Formmassen können durch Extrusion oder Spritzguß zu Formkörpern verarbeitet werden, insbesondere zu Rohren, Platten, Großbehältern oder Tiefziehfolien.

Überraschenderweise wurde nun gefunden, daß derartige, gemäß deutscher Patentanmeldung P 37 08 913.7 herstellbaren Pfropfpolymerisate die Benzinbeständigkeit von thermoplastischen, aromatischen Polycarbonat- und/oder Polyestercarbonat-Formmassen verbessern. Dieser Effekt kommt auch dann zum Tragen, wenn die erfindungsgemäßen Formmassen als weitere thermoplastische Komponente Vinylcopolymerisate (C1) oder Polyalkylenterephthalate (C2) enthalten.

Gegenstand der vorliegenden Erfindung ist somit die Verwendung von Pfropfpolymerisaten, hergestellt aus
a) 40 bis 90 Gew.-% eines teilchenförmigen Dienkautschuks mit Gelgehalten von 10 bis 90 Gew.-% und einem mittleren Teilchendurchmesser von 0,05 »m bis 2,0 »m, vorzugsweise 0,1 »m bis 0,6 »m, und
b) 60 bis 10 Gew.-% Styrol, Acrylnitril, Methylmethacrylat oder Mischungen daraus durch Emulsions-Pfropfpolymerisation, wobei man zur Pfropfpolymerisation ein Initiatorsystem aus einem organischen Hydroperoxid und Ascorbinsäure unter Erzielung einer Pfropfausbeute von > 60 Gew.-%, vorzugsweise > 75 Gew.-%, insbesondere > 85 Gew.-%, bezogen auf eingesetzte Monomere b), verwendet,
zur Verbesserung der Benzinbeständigkeit von thermoplastischen, aromatischen Polycarbonat- und/oder Polyestercarbonat-Formmassen, die gegebenenfalls als weitere thermoplastische Komponente Vinylcopolymerisate (C1) oder Polyalkylenterephthalate (C2) enthalten können.

Gemäß einer bevorzugten Ausführungsform werden Pfropfpolymerisate der deutschen Patentanmeldung P 37 08 913.7 verwendet, die durch Pfropfpolymerisation der Monomeren b) in wäßriger Emulsion in Gegenwart einer Emulsion des Kautschukpolymerisates a) bei Temperaturen von 40°C bis 70°C, insbesondere von 50°C bis 70°C, hergestellt werden, wobei 0,3 bis 1,5 Gew.-Teile Hydroperoxid (I) und 0,1 bis 1 Gew.-Teil Ascorbinsäure (II), jeweils bezogen auf 100 Gew.-Teile Pfropfmonomere b), eingesetzt werden, und wobei das Gewichtsverhältnis (I):(II) 0,3 bis 15, insbesondere 1 bis 10 und vorzugsweise 3 bis 8 ist.

Die Herstellung von erfindungsgemäß verwendbaren Pfropfpolymerisaten auf Polybutadiengrundlagen mit Teilchengrößen außerhalb des in der deutschen Patentanmeldung P 3 708 913.7 angegebenen Bereichs erfolgt in analoger Weise zur Herstellung gemäß P 3 708 913.7.

Als thermoplastische, aromatische Polycarbonat- und/oder Polyestercarbonat-Formmassen sind einerseits aromatische Polycarbonate und andererseits gemischte Polyphenolester von aromatischen Dicarbonsäuren und der Kohlensäure zu verstehen, wobei erstere bevorzugt sind.

Die Verbesserung der Zähigkeit von Polycarbonaten insbesondere bei tiefen Temperaturen durch den Zusatz von Pfropfpolymerisaten auf Polybutadien ist bekannt (siehe beispielsweise DE-AS 1 170 141 beziehungsweise US-PS 3 130 177).

In die gleiche Richtung wirken Modifikatoren auf Basis von Polyacrylaten, Polyolefinen, kautschukartigen Dienpolymerisaten oder Styrolpolymeren oder Mischungen davon in Copolyestercarbonaten (siehe beispielsweise EP-OS 0 119 311).

Ein Nachteil derartiger Formmassen ist jedoch die unzureichende Beständigkeit gegen Kraftstoffe (Benzin) oder andere organische Solventien.

Um Beständigkeit gegen Benzin und gute Kerbschlagzähigkeit von Polycarbonatformmassen zu erhalten, werden spezielle Blockcopolymere (Kraton® G) und entweder Copolymere aus Olefinen mit Acrylaten (siehe EP-PS 0 119 533), oder mit Pfropfcopolymeren (siehe EP-OS 0 173 358) eingesetzt.

Für Mischungen aus Copolyestercarbonaten mit Polycarbonaten dient ebenfalls eine Kombination aus dem erwähnten speziellen Blockcopolymer mit Olefin-Acrylat-Copolymer oder Olefin-Dien-Terpolymeren (siehe EP-OS 0 186 825). Der Zusatz der speziellen Blockcopolymere kann jedoch zu Störungen in der Qualität der Formmassen, wie Delamination und verschlechterter Tieftemperaturzähigkeit führen.

Aus der EP-OS 0 104 695 sind Mischungen aus Pfropfpolymerisaten, mit Polycarbonaten, mit Polyurethanen und gegebenenfalls mit Copolymeren bekannt, die eine gute Benzinbeständigkeit und sehr gute Verarbeitbarkeit haben. Für die Herstellung der Polymerisate können Redox-Initiatorsysteme verwandt werden (Seite 5 der EP-OS).

Ein anderer Weg, Polycarbonatformmassen mit guter Schlagzähigkeit und Oberflächenresistenz gegen Benzin und andere Kraftstoffe herzustellen, besteht in der Kombination der Polycarbonate mit Polyalkylenterephthalaten, denen spezielle Polymerisate zugesetzt werden [siehe DE-OS 3 302 124, insbesondere Seite 27, Absatz 3, und EP-OS 0 131 196, Seite 12, letzter Absatz), wobei durch den Zusatz von Nitrilkautschuken zu Polycarbonaten gemäß EP-OS 0 131 196 auch schon ohne Polyesterzusatz die Benzinbeständigkeit verbessert wird (siehe Erteilungsverfahren von EP-PS 0 131 196).

Die erfindungsgemäß einzusetzenden Pfropfpolymerisate verbessern die Beständigkeit von Polycarbonat/Polyalkylenterephthalat-Formmassen noch zusätzlich über das gemäß DE-OS 3 302 124 bekannte Niveau hinaus. Die erfindungsgemäßen Pfropfpolymerisate ergeben mit Polycarbonat benzinbeständige und tieftemperaturzähe Formmassen ohne jeden weiteren Zusatz, wie gemäß EP-PS 0 131 196 erforderlich.

Entsprechende Mischungen, in denen die Polycarbonatkomponente ein Polydiorganosiloxan-Polycarbonat-Blockcopolymeres ist, sind aus DE-OS 3 347 071 und DE-OS 3 506 680 bekannt.

Gemäß vorliegender Erfindung gelingt es, thermoplastische, aromatische Polycarbonat- und/oder Polyestercarbonat-Formmassen durch Pfropfpolymerisate benzinbeständig zu machen und dabei gleichzeitig das gute Eigenschaftsbild der Mischungen aus thermoplastischen, aromatischen Polycarbonaten und/oder Polyestercarbonaten und thermoplastischen Pfropfpolymerisaten zu erhalten.

Die hier in Rede stehenden Polycarbonate und/oder Polyestercarbonate sind literaturbekannt oder nach literaturbekannten Verfahren herstellbar (siehe dazu beispielsweise Schnell, "Chemistry and Physics of Polycarbonates", Interscience Publishers, 1964, DE-AS 1 495 626, DE-OS 2 232 877, DE-OS 2 703 376, DE-OS 3 000 610, DE-OS 2 714 544, DE-OS 2 940 024 und DE-OS 3 007 934). Besonders bevorzugt ist das Phasengrenzflächenverfahren.

Die Herstellung der Polycarbonate und/oder Polyestercarbonate erfolgt in bekannter Weise beispielsweise durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen, und gegebenenfalls unter Mitverwendung von trifunktionellen oder mehr als trifunktionellen Verzweigern, beispielsweise Triphenolen oder Tetraphenolen. [Für die Herstellung von aromatischen Polycarbonaten siehe beispielsweise Schnell, loccit., Seite 31 ff; für die Herstellung von aromatischen Polyestern siehe beispielsweise DE-OS 294 0024 und für die Herstellung von aromatischen Polyestercarbonaten siehe beispielsweise DE-OS 3007 934.]

Diphenole zur Herstellung der Polycarbonate und/oder Polyestercarbonate sind vorzugsweise solche der Formel (I) 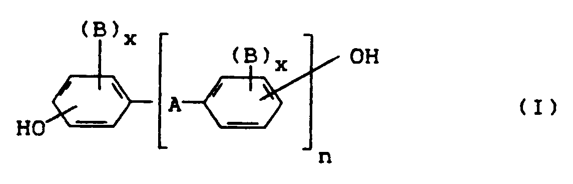
worin
- "A": eine Einfachbindung, ein C₁-C₅-Alkylen, ein C₂-C₅-Alkyliden, ein C₅-C₆-Cycloalkyliden, -O-, -SO-, 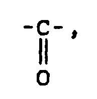 -S- 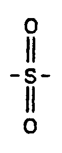 oder ein Rest der Formel (II) 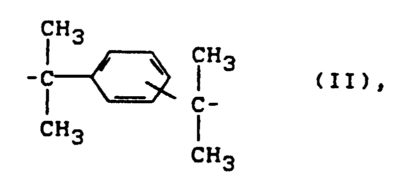
- "B": Chlor, Brom oder Methyl,
- "X": 0, 1 oder 2 und "n" 1 oder 0 sind.

Bevorzugte Diphenole sind somit Hydrochinon, Resorcin, Dihydroxydiphenyle, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfide, Bis-(hydroxyphenyl)-sulfone und α,α-Bis-(hydroxyphenyl)-diisopropylbenzole sowie deren kernbromierte und/oder kernchlorierte und/oder kernmethylierte Derivate.

Die wichtigsten Diphenole sind Bisphenol-A, 2,2-Bis-(3,5-dimethyl-4-hydroxyphenyl)-propan, 2,4-Bis-(4-hydroxyphenyl)-2-methylbutan, 1,1-Bis-(4-hydroxyphenyl)-cyclohexan, 4,4-Dihydroxyphenylsulfid, 4,4-Dihydroxyphenylsulfon sowie deren di- und tetrabromierte - oder -chlorierte Derivate wie 2,2-Bis-(3-chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Besonders bevorzugt ist 2,2-(Bis-4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate sind geeignete Kettenabbrecher beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethyl-heptyl)-phenol. Die Menge an einzusetzenden Kettenabbrechern beträgt im allgemeinen zwischen 0,5 Mol-% und 10 Mol-%, bezogen auf die Molsumme der jeweils eingesetzten Diphenole.

Die thermoplastischen, aromatischen Polycarbonate haben mittlere Gewichtsmittelmolekulargewichte (Mw, gemessen z. B. durch Ultrazentrifugation oder Streulichtmessung) von 10.000 bis 200.000, vorzugsweise von 20.000 bis 80.000.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an drei- oder mehr als dreifunktionellen Verbindungen, beispielsweise solchen mit drei oder mehr als drei phenolischen Gruppen.

Geeignet sind sowohl Homopolycarbonate als auch Copolycarbonate. Zur Herstellung erfindungsgemäßer Copolycarbonate A) können auch 1 bis 25 Gew.-%, vorzugsweise 2,5 bis 25 Gew.-% (bezogen auf die Gesamtmenge an einzusetzenden Diphenolen), Diphenole der Formel (III) verwendet werden, 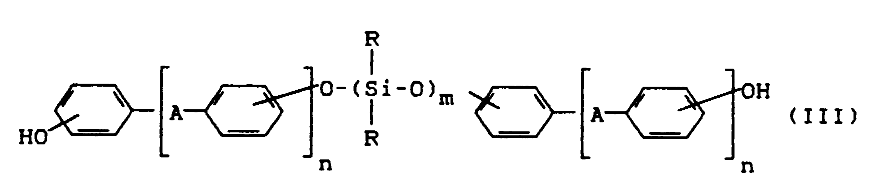
worin
-A- die für Formel (I) genannte Bedeutung hat, n 1 oder null ist, die R's gleich oder verschieden sind und ein lineares C₁-C₂₀-Alkyl, verzweigtes C₃-C₂₀-Alkyl oder C₆-C₂₀-Aryl, vorzugsweise CH₃, sind und m eine ganze Zahl zwischen 5 und 100, vorzugsweise zwischen 20 und 80 ist. Polydiorganosiloxane mit Hydroxy-aryloxy-Endgruppen gemäß Formel (III) sind bekannt (s. beispielsweise US-Patent 3 419 634) bzw. nach literaturbekannten Verfahren herstellbar. Die Herstellung Polydiorganosiloxan-haltiger Copolycarbonate wird z.B. in DE-OS 3 334 782 beschrieben.

Bevorzugte Polycarbonate sind neben den Bisphenol A-Homopolycarbonaten die copolycarbonate von Bisphenol A mit bis zu 15 Mol-%, bezogen auf die Molsummen an Diphenolen, an den anderen der wichtigsten Diphenole, insbesondere an 2,2-Bis-(3,5-dibrom-4-hydroxyphenyl)-propan.

Aromatische Dicarbonsäuredihalogenide zur Herstellung der thermoplastischen, aromatischen Polyester und thermoplastischen, aromatischen Polyestercarbonate sind vorzugsweise die Disäuredichloride der Isophthalsäure, Terephthalsäure, Diphenylether-4,4′-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Für die Herstellung der aromatischen Polyester werden die Dicarbonsäuredihalogenide als einzige bifunktionelle Säurederivate verwendet; bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyester und Polyestercarbonate kommen außer den bereits genannten Monophenolen noch deren Chlorkohlensäureester sowie die Säurechloride von aromatischen Monocarbonsäuren, die gegebenenfalls durch C₁-C₂₂-Alkylgruppen oder durch Halogenatome substituiert sein können, sowie aliphatische C₂-C₂₂-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und Falle von Monocarbonsäurechlorid-Kettenabbrechern auf Mole Dicarbonsäuredichloride.

Die aromatischen Polyester und Polyestercarbonate können auch aromatische Hydroxycarbonsäuren eingebaut enthalten.

Die aromatischen Polyester und aromatischen Polyestercarbonate können sowohl linear als auch in bekannter Weise verzweigt sein. (Siehe dazu ebenfalls DE-OS 2 940 024 und DE-OS 3 007 934.)

Als Verzweigungsmittel können beispielsweise 3- oder mehrfunktionelle Carbonsäurechloride, wie Trimesinsäuretrichlorid, Cyanursäuretrichlorid, 3,3′, 4,4′-Benzophenon-tetracarbonsäuretetrachlorid, 1,4,5,8-Naphthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3- oder mehrfunktionelle Phenole, wie Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis[4,4-bis-(4-hydroxy-phenyl)-cyclohexyl]-propan,
2,4-Bis-(4-hydroxyphenyl-isopropyl)-phenol,
Tetra-(4-hydroxyphenyl)-methan,
2,6-Bis-(2-hydroxy-5-methyl-benzyl)-4-methyl-phenol,
2-(4-Hydroxyphenyl)-2-(2,4-dihydroxyphenyl)-propan,
Tetra-(4-[4-hydroxyphenyl-isopropyl]-phenoxy)-methan,
1,4-Bis-[4,4˝-dihydroxytriphenyl)-methyl]-benzol,
in Mengen von 0,01 bis 1,0 Mol-% (bezogen auf eingesetzte Diphenole) verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren.

Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen.

Sowohl der Ester- als auch der Carbonatanteil der aromatischen Polyestercarbonate kann in Form von Blöcken oder statistisch verteilt im Polykondensat vorliegen.

Die relative Lösungsviskosität (η rel) der aromatischen Polyester und aromatischen Polyestercarbonate liegt im Bereich 1,18 bis 1,4, vorzugsweise 1,22 bis 1,3 (gemessen an Lösungen von 0,5 g Polyestercarbonat in 100 ml CH₂Cl₂-Lösung bei 25°C).

Die thermoplastischen, aromatischen Polycarbonate und/oder Polyestercarbonate können allein oder im beliebigen Gemisch untereinander eingesetzt werden.

Die erfindungsgemäß zu verwendende Menge an Pfropfpolymerisat für die Benzinfestausrüstung der Polycarbonat-und/oder Polyestercarbonat-Formmassen liegt zwischen 4 und 50 Gew.-%, vorzugsweise zwischen 10 und 40 Gew.-%, bezogen jeweils auf 100 Gew.-% an Pfropfpolymerisat und Polycarbonat und/oder Polyestercarbonat. Somit liegt der Gewichtsanteil an Polycarbonat und/oder Polyestercarbonat zwischen 96 Gew.-% und 50 Gew.-%, vorzugsweise zwischen 90 Gew.-% und 60 Gew.-%.

Gegenstand der vorliegenden Erfindung sind somit auch Mischungen, enthaltend
A) 96 Gew-% bis 50 Gew.-%, vorzugsweise 90 Gew.-% bis 60 Gew.-%, bezogen auf die Gewichtssumme aus A) + B), an thermoplastischen, aromatischen Polycarbonaten mit mittleren Gewichtsmittelmolekulargewichten von 10 000 bis 200 000 und/oder Polyestercarbonaten mit relativen Lösungsvikositäten von 1,18 bis 1,4 und
B) 4 Gew.-% bis 50 Gew.-%, vorzugsweise 10 Gew.-% bis 40 Gew.-%, bezogen auf die Gewichtssumme aus A) + B), an Pfropfpolymerisaten, die dadurch gekennzeichnet sind, daß die Pfropfpolymerisate B) aus
   a) 40 bis 90 Gew.-% eines teilchenförmigen Dienkautschuks mit Gelgahalten von 10 bis 90 Gew-% und einem mittleren Teilchendurchmesser von 0,05 »m bis 2,0 »m, vorzugsweise 0,1 »m bis 0,6 »m, und
   b) 60 bis 10 Gew.-% Styrol, Acrylnitril, Methylmethacrylat oder Mischungen daraus durch Emulsions-Pfropfpolymerisation hergestellt sind, wobei man zur Pfropfpolymerisation ein Initiatorsystem aus einem organischen Hydroperoxid und Ascorbinsäure unter Erzielung einer Pfropfausbeute von > 60 Gew.-%, vorzugsweise > 75 Gew.-%, insbesondere > 85 Gew.-%, bezogen auf eingesetzte Monomere b), verwendet.

Maximal die Hälfte, vorzugsweise maximal ein Drittel der Gewichtsprozente der Komponente A) kann durch

ein thermoplastisches Vinyl-Copolymerisate C.1 aus wenigstens einem Monomeren aus der Reihe Styrol, α-Methylstyrol, kernsubstituiertem Styrol (C.1.1) mit wenigstens einem Monomeren aus der Reihe Acrylnitril, Methacrylnitril, Methylmethacrylat, Maleinsäureanhydrid, N-substituiertes Maleinimid (C.1.2) oder ein thermoplastisches Polyalkylenterephthalat C.2, ersetzt seine, wobei die Summe der Gewichtsprozente aus den Komponenten A+B+C jeweils 100 Gew% ist.

Thermoplastische Copolymerisate mit einer Zusammensetzung gemäß Komponente C.1 können bei der Pfropfpolymerisation zur Herstellung der Komponente B. als Nebenprodukte entstehen; die erfindungsgemäß einsetzbare Menge an Copolymerisat C.1 bezieht dieses Nebenprodukt der Pfropfpolymerisation nicht mit ein.

Die Copolymerisate gemäß Komponente C.1 sind harzartig, thermoplastisch und kautschukfrei. Besonders bevorzugte Copolymerisate C.1 sind solche aus Styrol und/oder α-Methylstyrol mit Acrylnitril und gegebenenfalls mit Methylmethacrylat.

Besonders bevorzugte Gewichtsverhältnisse im thermoplastischen Copolymerisat C.1 sind 60 bis 80 Gew.-% C.1.1 und 40 bis 20 Gew.-% C.1.2.

Als kernsubstituierte Styrole seien Halogenstyrole und p-Methylstyrol erwähnt.

Die Copolymerisate gemäß Komponente C.1 sind bekannt und lassen sich durch radikalische Polymerisation, insbesondere durch Emulsion-, Suspensions-, Lösungs- oder Massepolymerisation herstellen. Die Copolymerisate gemäß Komponente C.1 besitzen vorzugsweise Molekulargewichte M_{w} (Gewichtsmittel, ermittelt durch Lichtstreuung oder Sedimentation) zwischen 15.000 und 200.000 und Grenzviskositäten zwischen 20 und 110 ml/g (gemessen in Dimethylformamid bei 25°C).

Polyalkylenterephthalate C.2 im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder araliphatischen Diolen und Mischungen dieser Reaktionsprodukte. Sie lassen sich nach bekannten Methoden herstellen (Kunststoff-Handbuch, Bd. VIII, S. 695 ff, Carl-Hanser Verlag, München, 1973).

Bevorzugte Polyalkylenterephthalate C.2 enthalten mindestens 80, vorzugsweise mindestens 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butandiol-1,4-reste.

Die bevorzugten Polyalkylenterephthalate C.2 können neben Terephthalsäureresten bis zu 20 Mol-% Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4′-Diphenyldicarbonsäure, Bernstein-, Adipin-, Sebacin-, Azelain-, Cyclohexandiessigsäure.

Die bevorzugten Polyalkylenterephthalate C.2 können neben Ethylenglykol- bzw. Butandiol-1,4-resten bis zu 20 Mol-%, vorzugsweise bis zu 10 Mol-%, anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexandimethanol-1,4, 3-Ethylpentandiol-2,4, 2-Methylpentandiol-2,4, 2,2,4-Trimethylpentandiol-1,3 und -1,6, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethylcyclobutan, 2,2-Bis-(3-β-hydroxyethoxyphenyl)-propan und 2,2-Bis-(4-hydroxypropoxyphenyl)-propan (DE-OS 2 407 647, 2 407 776, 2 715 932).

Die Polyalkylenterephthalate C.2 können durch Einbau relativ kleiner Mengen 3- oder 4-wertiger Alkohole oder 3- oder 4-basischer Carbonsäuren, wie sie z.B. in der DE-OS 1 900 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate C.2, die allein aus Terephthalsäure oder deren reaktionsfähigen Derivaten (z.B. deren Dialkylestern) und Ethylenglykol und/oder Butandiol-1,4 hergestellt worden sind, und Mischungen dieser Polyalkylenterephthalate.

Die als Komponente C.2 vorzugsweise verwendeten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gewichtsteile) bei 25°C und einer Konzentration von 0,5 g/dl.

Die Polycarbonat- und/oder Polyestercarbonat-Formmassen können weitere für thermoplastische, aromatische Polyester, thermoplastische, aromatische Polycarbonate oder für thermoplastische, aromatische Polyestercarbonate, Vinylcopolymerisate oder für Polyalkylenterephthalate übliche Zusätze wie Stabilisatoren, Pigmente, Fließmittel, Entformungsmittel, Flammschutzmittel und Antistatika enthalten.

Entsprechend übliche Zusätze für Pfropfpolymerisate können ebenfalls zugesetzt werden.

Die Polycarbonat- und/oder Polyestercarbonat-Formmassen, enthaltend die Komponenten A), B) und gegebenenfalls C) und/oder wirksame Mengen an üblichen Stabilisatoren, Pigmenten, Fließmitteln, Entformungsmitteln, Flammschutzmitteln und/oder Antistatika werden hergestellt, indem man die jeweiligen Bestandteile in bekannter Weise vermischt und bei Temperaturen von 200°C bis 330°C in üblichen Aggregaten, wie Innenknetern, Extrudern oder Doppelwellenschnecken, schmelzcompoundiert oder schmelzextrudiert.

Gegenstand der vorliegenden Erfindung ist somit auch ein Verfahren zur Herstellung von thermoplastischen Formmassen, enthaltend die Komponenten A), B) und gegebenenfalls C) und/oder wirksame Mengen an üblichen Stabilisatoren, Pigmenten, Fließmitteln, Entformungsmitteln, Flammschutzmitteln und/oder Antistatika, das dadurch gekennzeichnet ist, daß man die Komponenten A), B) und gegebenenfalls C), Stabilisatoren, Pigmente, Fließmittel, Entformungsmittel, Flammschutzmittel und/oder Antistatika in bekannter Weise vermischt und danach bei Temperaturen von 200°C bis 330°C in gebräuchlichen Aggregaten schmelzcompoundiert oder schmelzextrudiert.

Die Vermischung der einzelnen Bestandteile kann in bekannter Weise sowohl sukzessiv als auch simultan erfolgen, und zwar sowohl bei etwa 20°C (Raumtemperatur) als auch bei höherer Temperatur.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind einmal Gehäuseteile jeder Art, z. B. für Haushaltsgeräte, wie Saftpressen, Kaffeemaschinen und Mixer, zum anderen Abdeckplatten für den Bausektor und Teile für den Bausektor und insbesondere Teile für den Kfz-Sektor. Sie werden außerdem auf dem Gebiet der Elektrotechnik, beispielsweise für Steckerleisten, eingesetzt, weil sie sehr gute elektrische Eigenschaften haben.

Eine weitere Form der Verarbeitung ist die Herstellung von Formkörpern durch Tiefziehen aus vorher hergestellten Platten oder Folien.

Teilchengröße bedeutet immer mittlerer Teilchendurchmesser d₅₀, ermittelt durch Ultrazentrifugenmessungen nach W. Scholtan et al., Kolloid-Z. und Z. Polymere 250 (1972), 782-796.

### Beispiele

### 1. Eingesetzte Polykondensate und Polymerisate

A) Lineares Polycarbonat auf Basis Bisphenol A mit einer relativen Lösungsviskosität ηrel von 1,26 bis 1,28, gemessen in CH₂Cl₂ bei 25°C und einer Konzentration von 0,5 g / 100 ml.
B) Pfropfpolymerisate
   a) Pfropfgrundlage
      Emulsion eines partiell vernetzten, grobteiligen Polybutadiens mit einem mittlerer Teilchendurchmesser von 0,38 »m (d₅₀-Wert), einem Gelgehalt von 89 Gew.-%. Die Emulsion enthält 50 Gew.-% Polymerisatfeststoff.
   b) Herstellung der Pfropfpolymerisate

   B.I) Pfropfpolymerisat aus 50 Gew.-% Dienkautschuk (a) und 50 Gew.-% SAN-Copolymer gemäß deutscher Patentanmeldung P 3 708 913.7.
      Eine Mischung aus 200 Gew.-Teilen des Latex (a) und 149 Gew.-Teilen Wasser werden in einem Reaktor vorgelegt und auf 60 bis 62°C aufgeheizt. Bei dieser Temperatur werden folgende zwei Lösungen bzw. Emulsionen in nachfolgender Reihenfolge in den Reaktor eingegeben:
      1. 0,0836 Gew.-Teile Cumolhydroperoxid
         6,9600 Gew.-Teile Wasser
         0,0600 Gew.-Teile Na-Salz von C₁₄-C₁₆-Alkylsulfonsäuren
      2. 0,0557 Gew.-Teile Ascorbinsäure
         6,9600 Gew.-Teile Wasser
      Danach werden nachstehende Zuläufe innerhalb von 4 Stunden bei einer Innentemperatur von 60 bis 62°C in den Reaktor unter Rühren eindosiert:
      Z1) 39,05 Gew.-Teile Wasser
         4,00 Gew.-Teile Na-Salz der disproportionierten Abietinsäure
         3,10 Gew.-Teile 1n-Natronlauge
         0,62 Gew.-Teile Cumolhydroperoxid
      Z2) 72 Gew.-Teile Styrol
         28 Gew.-Teile Acrylnitril
      Z3) 39,8 Gew.-Teile Wasser
         0,105 Gew.-Teile Ascorbinsäure
      Anschließend wird bei 60 bis 62°C 6 Stunden lang auspolymerisiert. Der Monomerumsatz ist größer als 97 Gew.-%.
      Nach Stabilisierung mit 1,2 Gew.-Teilen phenolischem Antioxidanz, pro 100 Gew.-Teile Pfropfpoly-mer, wird das Pfropfpolymer durch Koagulation mit einer Essigsäure/Mg-Sulfat-Mischung isoliert, gewaschen und zu einem Pulver getrocknet.
      Die SAN-Pfropfung verlief mit einer Pfropfausbeute von 89 Gew.-%.
      Die Pfropfausbeute wurde bestimmt durch fraktionierende Entmischung mit den entmischenden Flüssigkeiten Dimethylformamid/Methylcyclohexan in der Ultrazentrifuge und durch Ermittlung der Mengen und der chemischen Zusammensetzung der so erhaltenen Fraktionen [siehe R. Kuhn, Makromol-Chemie 177, 1525 (1976)].
   B.II) Pfropfpolymerisat aus 50 Gew.-% Dienkautschuk (a) und 50 Gew.-% SAN-Copolymer
      (Vergleichsbeispiel)
      In einem Reaktor werden vorgelegt:
      1.500 Gew.-Teile der Emulsion a) und 1.030 Gew.-Teile Wasser. Nach Aufheizen auf 65°C wird eine Starterlösung aus 3 Gew.-Teilen Kaliumperoxidisulfat in 50 Gew.-Teilen Wasser eingespeist. Anschließend werden folgende zwei Lösungen innerhalb von 6 Stunden bei 65°C in den Reaktor eingespeist:
      1. 540 Gew.-Teile Styrol
         210 Gew.-Teile Acrylnitril
      2. 1.000 Gew.-Teile Wasser
         13 Gew.-Teile Na-Salz der disproportionierten Abietinsäure
         10 Gew.-Teile in-Natronlauge
      Im Anschluß daran wird durch Nachrühren bei 65°C innerhalb von 4 Stunden auspolymerisiert. Der Monomerumsatz ist größer als 98 Gew.-%. Die Stabilisierung und Isolierung des Pfropfpolymerisats erfolgt analog Vorschrift B.I). Die SAN-Pfropfung verlief mit einer Pfropfausbeute von 55 Gew.-%. Die Bestimmung der Pfropfausbeute erfolgte wie für B.I).
C)
   C.I Styrol/Acrylnitril-Copolymerisat mit einem Styrol/Acrylnitril-Verhältnis von 72 : 28 und einer Grenzviskosität von [η] = 0,55 dl/g (Messung in Dimethylformamid bei 20°C).
   C.II Lineares Polyethylenterephthalat mit einer Intrinsic-Viskosität [η] = 0,76 dl/g, gemessen in Phenol/o-Dichlorbenzol (1:1 Gew.-TL.) bei 25°C und einer Konzentration von 0,5 g/dl.

### 2. Herstellung und Prüfung der Formmassen

Die Compoundierung der Komponenten A), B) und gegebenenfalls C) erfolgte auf einem 3-l-Innenkneter bei Temperaturen von 200 bis 220°C (Beispiel 1 bis 4) bzw. auf einem Doppelwellenextruder bei 260°C (Beispiel 5).

Die Herstellung von Formkörpern erfolgte, soweit nicht anders angegeben, auf einer Spritzgießmaschine bei 260°C.

Das Spannungsrißverhalten wurde an Proportionalstäben 0,7, gemäß DIN 53 449/3 untersucht. Als Kraftstoffsimulanz wurde eine Mischung aus 50 Gew.-% Toluol und 50 Gew.-% Isooctan verwendet. Die Probekörper wurden mittels einer Kreisbogenschablone vorgedehnt und 5 min bei 23°C im Kraftstoffsimulant gelagert. Die Vordehnungen εₓ betrugen 0,4 % bis 2 %. Das Spannungsrißverhalten wurde über die Rißbildung bzw. den Bruch in Abhängigkeit von der Vordehnung beurteilt.

Die Bestimmung der Kerbschlagzähigkeit nach Methode Izod erfolgte an Prüfkörpern der Abmessung 2,5 x 0,5 x 0,125 Zoll (gemäß ASTM-D-256) bzw. der Abmessung 80 x 10 x 4 mm (ISO R 180) bei Raumtemperatur, -20°C, -30°C, -40°C und -50°C. Aus den ermittelten Werten wurde der Spröd/Zäh-Übergang bestimmt, d. h. jener Temperaturbereich, in dem erste Sprödbrüche auftreten.

Wie die nachstehende Tabelle 1 zeigt, werden erfindungsgemäß tieftemperaturzähe Polycarbonat-Formmassen erhalten, wobei die erfindungsgemäßen Beispiele gegenüber vergleichbaren Rezepturen verbesserte Beständigkeit gegenüber Kraftstoffsimulantien aufweisen, d.h. Rißbildung, die zum Bruch des Prüfkörpers führt, erfolgt erst bei höheren Randfaserdehnungen bzw. überhaupt nicht.

**Tabelle 1**

| Zusammensetzung und Eigenschaften der Formmassen | | | | | | | |
|---|---|---|---|---|---|---|---|
| Bsp. | Komponenten | | | | | Bruch bei ε_{R} (%) | Spröd/Zäh-Übergang (°C) |
| | A | B.I | B.II | C.I | C.II | | |
| | (Gew.-Teile) | | | | | | |
| 1 | 80 | 20 | | | | 0,6 | < - 40 |
| 2¹⁾ | 80 | | 20 | | | 0,4 | < - 40 |
| 3 | 45 | 33 | | 22 | | kein Bruch ²) | < - 40 |
| 4¹⁾ | 45 | | 33 | 22 | | 0,7 | < - 40 |
| 5 | 68 | 15 | | | 17 | kein Bruch ²⁾ | - 35 |

| | | | | | | | |
|---|---|---|---|---|---|---|---|
| ¹⁾ Vergleichsbeispiele | | | | | | | |
| ²⁾ kein Bruch bis ε_{R} = 2,0 % | | | | | | | |

## Patentansprüche

1. Mischungen enthaltend
A) 96 Gew.-% bis 50 Gew.-%, bezogen auf die Gewichtssumme aus A) + B) an thermoplastischen, aromatischen Polycarbonaten mit mittleren Gewichtsmittelmolekulargewichten von 10.000 bis 200.000 und/oder Polycestercarbonaten mit relativen Lösungsviskositäten von 1,18 bis 1,4,
B) 4 Gew.-% bis 50 Gew.-%, bezogen auf die Gewichtssumme aus A) + B) an Pfropfpolymerisaten, dadurch gekennzeichnet, daß die Pfropfpolymerisate B) aus
a) 40 bis 90 Gew.-% eines teilchenförmigen Dienkautschuks mit Gelgehalten von 10 bis 90 Gew.-% und einem mittleren Teilchendurchmesser von 0,05 »m bis 2,0 »m und
b) 60 bis 10 Gew.-% Styrol, Acrylnitril, Methylmethacrylat oder Mischungen daraus durch Emulsions-Pfropfpolymerisation hergestellt sind,
wobei man zur Pfropfpolymerisation ein Initiatorsystem aus einem organischen Hydroperoxid und Ascorbinsäure unter Erzielung einer Pfropfausbeute von > 60 Gew.-%, bezogen auf eingesetzte Monomere b), verwendet.

2. Mischungen gemaß Anspruch 1, dadurch gekennzeichnet, daß maximal die Hälfte der Gewichtsprozente der Komponente A) zusätzlich durch ein thermoplastisches Vinylcopolymerisat C.1 aus
C.1.1 wenigestens einem Monomeren aus der Reihe Styrol, α-Methylstyrol, kernsubstituiertem Styrol mit
C.1.2 wenigstens einem Monomeren aus der Reihe Acrylnitril, Methacrylnitril, Methylmethacrylat, Maleinsäureanhydrid, N-substituiertem Maleinimid oder
ein thermoplastisches Polyalkylenterephthalat C.2,
ersetzt sind, wobei die Summe der Gewichtsprozente aus den Komponenten A + B + C jeweils 100 Gew.-% ist.

3. Mischungen gemäß der Ansprüche 2 und 3, dadurch gekennzeichnet, daß sie zusätzlich Stabilisatoren, Pigmente, Fließmittel, Entformungsmittel, Flammschutzmittel und/oder Antistatika enthalten.

4. Mischungen gemaß der Ansprüche 1 bis 3, dadurch gekennzeichnet, daß der Dienkautschuk a) einen mittleren Teilchendurchmesser von 0,1 »m bis 0,6 »m hat.

5. Mischungen gemäß der Ansprüche 1 bis 4, dadurch gekennzeichnet, daß sie unter Erzielung einer Pfropfausbeute von > 75 Gew.-% hergestellt sind.

6. Mischung gemäß Ansprüchen 1 bis 5, dadurch gekennzeichnet, daß das Pfropfpolymerisat durch Pfropfpolymerisation der Monomeren b) in wäßriger Emulsion in Gegenwart einer Emulsion des Kautschukpolymerisates a) bei Temperaturen von 40 °C bis 70 °C hergestellt wird, wobei 0,3 bis 1,5 Gew.-Teile Hydroperoxid (I) und 0,1 bis 1 Gew.-Teil Ascorbinsäure (II), jeweils bezogen auf 100 Gew.-Teile Pfropfmonomere b), eingesetzt werden.

7. Mischung gemäß Ansprüchen 1 bis 6, dadurch gekennzeichnet, daß der Gelgehalt des Dienkautschuks a) 40 bis 80 Gew.-% ist.

8. Verwendung von Pfropfpolymerisaten gemäß Ansprüchen 1 bis 7 zur Verbesserung der Benzinbeständigkeit von thermoplastischen, aromatischen Polycarbonat- und/oder Polyestercarbonat-Formmassen.

9. Verfahren zur Herstellung der Mischungen der Ansprüche 1 bis 7, das dadurch gekennzeichnet ist, daß man die Komponenten A), B) und gegebenenfalls C), Stabilisatoren, Pigmente, Fließmittel, Entformungsmittel, Flammschutzmittel und/oder Antistatika in bekannter Weise vermischt und dadurch bei Temperaturen von 200 °C bis 330 °C in gebräuchlichen Aggregaten schmelzcompoundiert oder schmelzextrudiert.

## Claims

1. Blends containing
A) 96 wt.% to 50 wt.%, related to the total weight of A) + B), of thermoplastic, aromatic polycarbonates with average weight average molecular weights of 10,000 to 200,000 and/or polyester carbonates with relative solution viscosities of 1.18 to 1.4,
B) 4 wt.% to 50 wt.%, related to the total weight of A) + B), of graft polymers, characterised in that the graft polymers B) are produced from
a) 40 to 90 wt.% of a particulate diene rubber with gel contents of 10 to 90 wt.% and an average particle diameter of 0.05 »m to 2.0 »m and
b) 60 to 10 wt.% of styrene, acrylonitrile, methyl methacrylate or mixtures thereof by emulsion graft polymerisation,
wherein an initiator system comprising an organic hydroperoxide and ascorbic acid and giving a graft yield of > 60 wt.% related to the monomers b) used, is used for the graft polymerisation.

2. Blends according to claim 1, characterised in that at most half the weight percentage of component A) is additionally replaced by a thermoplastic vinyl copolymer C.1 prepared from
C.1.1 at least one monomer from the series styrene, α-methylstyrene, ring-substituted styrene with
C.1.2 at least one monomer from the series acrylonitrile, methacrylonitrile, methyl methacrylate, maleic anhydride, N-substituted maleimide or
a thermoplastic polyalkylene terephthalate C.2,
wherein the total weight percentages of components A + B + C in each case amount to 100 wt.%.

3. Blends according to claims 2 and 3, characterised in that they additionally contain stabilisers, pigments, plasticisers, mould release agents, flame retardants and/or anti-static agents.

4. Blends according to claims 1 to 3, characterised in that the diene rubber a) has an average particle diameter of 0.1 »m to 0.6 »m.

5. Blends according to claims 1 to 4, characterised in that they are produced at a graft yield of > 75 wt.%.

6. Blend according to claims 1 to 5, characterised in that the graft polymer is produced by graft polymerisation of the monomers b) in an aqueous emulsion in the presence of an emulsion of the rubber polymer a) at temperatures of 40°C to 70°C, wherein 0.3 to 1.5 parts by weight of hydroperoxide and 0.1 to 1 part by weight of ascorbic acid (II), in each case related to 100 parts by weight of graft monomers b), are used.

7. Blend according to claims 1 to 6, characterised in that the gel content of the diene rubber a) is 40 to 80 wt.%.

8. Use of graft polymers according to claims 1 to 7 to improve the petrol resistance of thermoplastic, aromatic polycarbonate and/or polyester carbonate moulding compounds.

9. Process for the production of the blends of claims 1 to 7, which process is characterised in that components A), B) and optionally C), stabilisers, pigments, plasticisers, mould release agents, flame retardants and/or antistatic agents are mixed in a known manner and so melt compounded or melt extruded at temperatures of 200°C to 330°C in customary machinery.

## Revendications

1. Mélanges contenant
A) 96 % à 50 % en poids, par rapport à la somme des poids de A) + B), de polycarbonates aromatiques thermoplastiques à des poids moléculaires moyens, moyenne en poids, de 10 000 à 200 000, et/ou de polyesterscarbonates à des viscosités relatives en solution de 1,18 à 1,4,
B) 4 % en poids à 50 % en poids, par rapport à la somme des poids de A) + B), de polymères greffés, ces mélanges se caractérisant en ce que les polymères greffés B) sont préparés à partir de
a) 40 à 90 % en poids d'un caoutchouc diénique en particules à un diamètre moyen de 0,05 »m à 2,0 »m et à des teneurs en gel de 10 à 90% en poids, et
b) 60 à 10 % en poids de styrène, d'acrylonitrile, de méthacrylate de méthyle ou leurs mélanges, par polymérisation greffée en émulsion,
la polymérisation greffée ayant été réalisée avec un système inducteur consistant en un hydroperoxyde organique et l'acide ascorbique, jusqu'à un rendement de greffage supérieur à 60 % en poids, par rapport aux monomères b) mis en oeuvre.

2. Mélanges selon revendication 1, caractérisés en ce que la moitié au maximum du pourcentage en poids du composant A) est remplacée par un copolymère vinylique thermoplastique C.1 de
C.1.1 au moins un monomère choisi parmi le styrène, l'α-méthylstyrène, les styrènes substitués dans le noyau, et
C.1.2 au moins un monomère choisi parmi l'acrylonitrile, le méthacrylonitrile, le méthacrylate de méthyle, l'anhydride maléique, les maléimides substitués à l'azote, ou bien
par un téréphtalate de polyalkylène thermoplastique C.2,
la somme des pourcentages en poids des composants A) + B) + C) étant toujours de 100 % en poids.

3. Mélanges selon les revendications 1 et 2, caractérisés en ce qu'ils contiennent en outre des stabilisants, des pigments, des agents fluidifiants, des agents de démoulage, des agents ignifugeants et/ou des agents antistatiques.

4. Mélanges selon les revendications 1 à 3, caractérisés en ce que le caoutchouc diénique a) a un diamètre de particule moyen de 0,1 »m à 0,6 »m.

5. Mélanges selon les revendications 1 à 4, caractérisés en ce qu'ils sont préparés avec un rendement de greffage supérieur à 75 % en poids.

6. Mélange selon les revendications 1 à 5, caractérisé en ce que le polymère greffé est préparé par polymérisation greffée des monomères b) en émulsion aqueuse en présence d'une émulsion du polymère du type caoutchouc a) à des températures de 40 à 70°C, avec utilisation de 0,3 à 1,5 partie en poids de l'hydroperoxyde (I) et de 0,1 à 1 partie en poids d'acide ascorbique (II), dans les deux cas pour 100 parties en poids des monomères greffés b).

7. Mélange selon les revendications 1 à 6, caractérisé en ce que la teneur en gel du caoutchouc diénique a) est de 40 à 80 % en poids.

8. Utilisation des polymères greffés selon les revendications 1 à 7 pour l'amélioration de la résistance à l'essence minérale des matières à mouler en polycarbonates et/ou polyesters-carbonates aromatiques thermoplastiques.

9. Procédé de préparation des mélanges des revendications 1 à 7, caractérisé en ce que l'on mélange de manière connue les composants A), B) et éventuellement C), les stabilisants, les pigments, les agents fluidifiants, les agents de démoulage, les agents ignifugeants et/ou les agents antistatiques puis on mélange ou on extrude à l'état fondu à des températures de 200 à 330°C dans des appareillages usuels.
